# EUROPÄISCHE PATENTSCHRIFT

(11) **EP 0 894 247 B1**
(45) Veröffentlichungstag und Bekanntmachung des Hinweises auf die Patenterteilung: **27.03.2002**
(21) Anmeldenummer: 97954945.8
(22) Anmeldetag: 23.12.1997
(51) Int. Cl.: G01J 5/08

(54) **VORRICHTUNG ZUR BERÜHRUNGSLOSEN TEMPERATURMESSUNG**
DEVICE FOR MEASURING TEMPERATURE WITHOUT CONTACT
DISPOSITIF DE MESURE SANS CONTACT DE LA TEMPERATURE

(30) Priorität: 24.12.1996 DE 19654276
(43) Veröffentlichungstag der Anmeldung: 03.02.1999
(73) Patentinhaber: Raytek GmbH, 13189 Berlin (DE)
(72) Erfinder: Kienitz, Ulrich, 12689 Berlin (DE); Schmidt, Volker, 13156 Berlin (DE); Klonowski, Uwe, 13088 Berlin (DE)
(74) Vertreter: Tetzner, Michael, Dipl.-Ing.
(86) Internationale Anmeldenummer: EP9707259
(87) Internationale Veröffentlichungsnummer: WO9828601

(56) Entgegenhaltungen:
- DE-A- 3 213 955
- DE-C- 3 710 486
- GB-A- 2 291 498
- US-A- 5 368 392

## Beschreibung

Die Erfindung betrifft eine Vorrichtung zur berührungslosen Temperaturmessung eines Objekts mit einer ins Endliche abbildenden Optik und einem Detektor gemäß dem Oberbegriff des Anspruches 1.

Bei der berührungslosen Temperaturmessung ist es im praktischen Gebrauch unerläßlich, daß der Meßfleck am zu untersuchenden Objekt in geeigneter Weise sichtbar gemacht wird. In der US-A-5,368,392 wird vorgeschlagen, einen Laserstrahl auf einen rotierenden Ablenkspiegel zu lenken, der auf dem Objekt einen Kreis zeichnet, der den Meßfleck darstellt. Diese Visiereinrichtung ist jedoch nur bei einer ins Unendliche abbildenden Optik einsetzbar. Bei einer ins Endliche abbildenden Optik gemäß dem Oberbegriff des Anspruches 1 wird ein Bild des Detektors durch die Optik entlang einer optischen Achse auf einen Meßfleck am Objekt ausgehend von der Optik bis zum sogenannten Scharfpunktmeßfleck verkleinert und anschließend vergrößert. Zur Kennzeichnung des Meßflecks bei einer ins Endliche abbildenden Optik wurde bisher beispielsweise ein sich öffnender Laserkegel gemäß US-A-5,368,392 verwendet, der seinen Ursprung in der Optik auf der optischen Achse hat und den tatsächlichen Strahlengang der Optik einmal vor und einmal nach dem Scharfpunktmeßfleck schneidet. Der sich dadurch ergebende Visierfleck stellt somit abgesehen von den beiden Schnittebenen lediglich eine ungefähre Darstellung des tatsächlichen Meßflecks dar.

Eine andere Möglichkeit besteht darin, einzelne Visierstrahlen vom äußeren Umfang der Optik auf den Schnittpunkt von optischer Achse und Scharfpunktmeßfleck zu richten. Der sich dadurch ergebende Visiermeßfleck verkleinert sich bis zum Scharfpunktmeßfleck auf 0, um sich anschließend wieder zu vergrößern. Auch diese Lösung zeigt nur die ungefähre Größe des Meßflecks.

Um einen genaueren Verlauf des Strahlengangs der Optik nachzubilden, hat man auch vorgeschlagen, ein Strahlenbündel für den Bereich zwischen Optik und Scharfpunktmeßfleck sowie ein weiteres Strahlenbündel für den Bereich danach vorzusehen. Dies bedeutet jedoch, daß sowohl vor als auch nach dem Scharfpunktmeßfleck jeweils zwei unterschiedlich große Visiermeßflecke sichtbar sind, die durch die beiden Visierstrahlenbündel hervorgerufen werden. Dies wiederum bedeutet einerseits, daß die Zuordnung des richtigen Visierbündels unter Umständen Schwierigkeiten bereitet und ferner die für die Erzeugung des Visierlichtes erforderliche Lichtenergie auf die beiden Strahlenbündel aufgeteilt werden muß. Dementsprechend ist auch die Intensität des Visiermeßflecks entsprechend geringer.

Aus der DE-C-37 10 486 ist ein Strahlungsmeßgerät bekannt, das eine Vorrichtung zur Meßfleckmarkierung aufweist, bei der ein Strahlenbündel einer Lichtquelle über ein Objektiv auf das Meßobjekt gerichtet wird. Damit die Beleuchtung des Meßflecks mit sichtbarem Licht das Meßergebnis nicht verfälscht, ist zwischen der Lichtquelle und dem Objektiv eine für das sichtbare Licht undurchlässige Meßfleckmarke eingesetzt, welche aus dem Strahlenbündel der Lichtquelle eine mittlere Kreisfläche ausblendet, so daß nur noch ein diese Kreisfläche umgebender Lichtring sichtbar bleibt. Bei der Benutzung wird die Lage des Strahlungsmeßgeräts in bezug zum Meßobjekt sowie der Abstand von demselben so lange verändert, bis die Abbildung der Meßfleckmarke bzw. der sie umgebende Lichtring an dem gewünschten Meßpunkt auf der Oberfläche des Meßobjekts scharf erscheint. Dadurch kann eine Messung im Scharfpunktmeßfleck erfolgen.

In der DE-A-32 13 955 wird ferner ein Strahlungsthermometer offenbart, das mit Hilfe von zwei Laserstrahlen den Durchmesser des Meßflecks kennzeichnet. Bei einer im Endlichen abbildenden Optik sind die beiden Visierstrahlen derart ausgerichtet, daß sie sich im Scharfpunktmeßfleck schneiden und im Anschluß daran mit der für das Distanzverhältnis des Strahlungsthermometers charakteristischen Winkeldivergenz auseinanderlaufen.

Der Erfindung liegt daher die Aufgabe zugrunde, eine Vorrichtung zur berührungslosen Temperaturmessung gemäß dem Oberbegriff des Anspruches 1 zu schaffen, die einfach zu handhaben ist und deren Visierfleck im wesentlichen dem tatsächlichen Meßfleck entspricht.

Erfindungsgemäß wird diese Aufgabe durch die Merkmale des Anspruches 1 gelöst, wobei jeder Visierstrahl windschief zur optischen Achse derart ausgerichtet ist, daß alle Visierstrahlen sowohl vor als auch nach dem Scharfpunktmeßfleck zur Kennzeichnung der Begrenzung des Meßflecks verwendet werden.

Die Visierstrahlen begrenzen auf dem zu untersuchenden Objekt sowohl vor als auch nach dem Scharfpunktmeßfleck lediglich einen Visierfleck, der sich bis zum Scharfpunktmeßfleck verkleinert und anschließend wieder vergrößert. Durch eine an die abbildende Optik angepaßte Ausrichtung der Visierstrahlen entspricht der dargestellte Visierfleck sowohl vor als auch hinter dem Scharfpunktmeßfleck im wesentlichen dem eigentlichen Meßfleck. Die Handhabung der Vorrichtung ist daher denkbar einfach, da auf dem Objekt lediglich ein Visierfleck sichtbar gemacht wird, der im wesentlichen dem tatsächlichen Meßfleck entspricht.

Weitere Vorteile und Ausgestaltungen der Erfindung sind Gegenstand der Unteransprüche und werden anhand der nachfolgenden Beschreibung und der Zeichnung näher erläutert.

In der Zeichnung zeigen
- Fig.1: eine schematische Prinzipdarstellung einer erfindungsgemäßen Vorrichtung,
- Fig.2: eine schematische Darstellung der Visierstrahlen in einer Seitenansicht,
- Fig.3: eine schematische Darstellung der Visierstrahlen gemäß Fig.2 in einer Aufsicht,
- Fig.4: eine schematische Darstellung der Lichtstrahlen in Richtung auf die Visiereinrichtung,
- Fig.5: eine schematische Darstellung der Visierstrahlen in Richtung auf die Visiereinrichtung,
- Fig.6: eine schematische Darstellung von Visierflecken in verschiedenen Schnittebenen gemäß Fig.3 und
- Fig.7: eine Darstellung einer erfindungsgemäßen Vorrichtung.

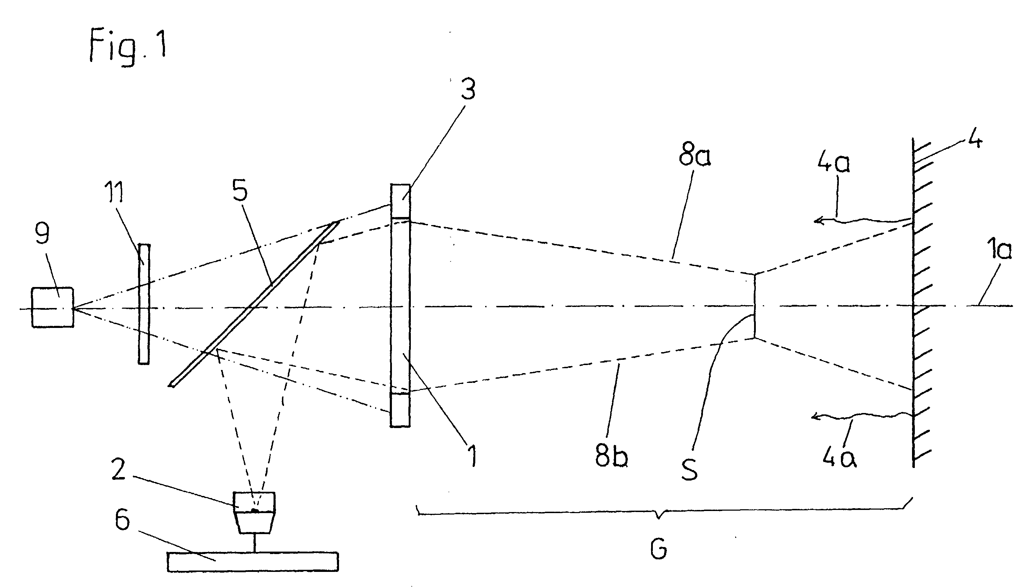

Fig.1 zeigt eine prinzipielle Darstellung der Vorrichtung zur berührungslosen Temperaturmessung eines Objekts. Sie besteht im wesentlichen aus einer ins Endliche abbildenden Optik 1, einem Detektor 2 sowie einer Visiereinrichtung 3.

Mit dem Bezugszeichen 4 ist ein zu untersuchendes Objekt gekennzeichnet. Die von diesem Objekt 4 ausgehende Wärmestrahlung 4a gelangt über die Optik 1 auf einen Umlenkspiegel 5, der die Strahlung auf den Detektor 2 lenkt. Die Wärmestrahlung wird im Detektor 2 in üblicher Weise in eine Spannung umgewandelt und in einer nachfolgenden Einrichtung 6 weiterverarbeitet.

Das Bild des Detektors 2 wird über den Umlenkspiegel 5 und die Optik 1 auf einen kreisförmigen Meßfleck am Objekt 4 abgebildet. Der Durchmesser des Meßflecks hängt dann im wesentlichen vom Abstand zwischen Optik 1 und Objekt 4 ab.

Bei einer ins Endliche abbildenden Optik, wie sie hier zur Anwendung kommt, wird das Bild des Detektors durch die Optik entlang einer optischen Achse 1a auf einen Meßfleck am Objekt 4 derart abgebildet, daß sich das Bild des Detektors ausgehend von der Optik bis zu einem Scharfpunktmeßfleck S verkleinert und anschließend vergrößert, wie das durch die beiden strichpunktierten Linien 8a, 8b dargestellt ist.

Demzufolge würde sich der Meßfleck auf dem Objekt 4 zunächst verringern, wenn sein Abstand G zur Optik 1 verkleinert wird. Wird dieser Abstand nach Erreichen des Scharfpunktmeßflecks S weiter verringert, würde sich der Meßfleck auf dem Objekt 4 wieder vergrößern.

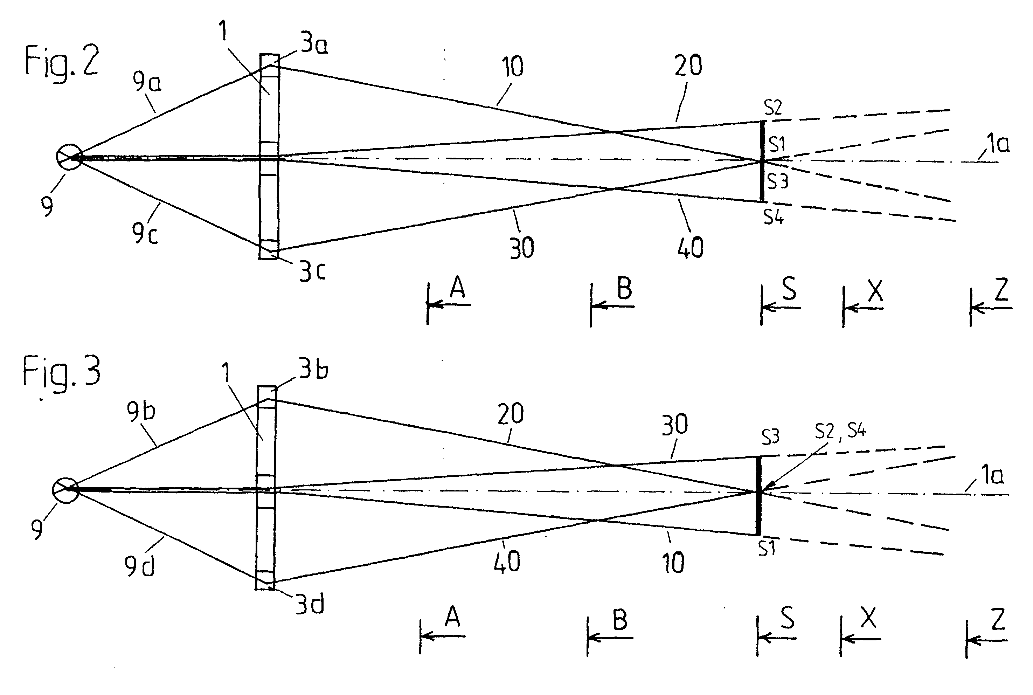

Mit Hilfe der Visiereinrichtung 3 ist es möglich, den Meßfleck auf dem Objekt 4 durch einen Visierfleck sichtbar zu machen. Der Visierfleck entspricht im wesentlichen dem tatsächlichen Meßfleck, unabhängig davon, ob das Objekt vor, hinter oder im Scharfpunktmeßfleck angeordnet wird. Das Prinzip dieser Visiereinrichtung 3 wird im folgenden anhand der Fig.2 bis 6 näher erläutert.

Die in den Fig.2 und 3 dargestellte Visiereinrichtung 3 besteht aus vier Visierelementen 3a, 3b, 3c und 3d, die mit gleichem Abstand voneinander konzentrisch um die Optik 1 angeordnet sind. Die Visiereinrichtung 3 wird auf der vom Objekt abgewandten Seite von einer Lichtquelle 9 bestrahlt. Die von der Lichtquelle 9 auf die einzelnen Visierelemente 3a, 3b, 3c, 3d auftrefenden Lichtstrahlen 9a, 9b, 9c, 9d werden durch die Visiereinrichtung derart gekippt, daß die entstehenden Visierstrahlen 10, 20, 30 und 40 windschief zur optischen Achse 1a ausgerichtet sind, wobei, wie aus den Fig.2 und 3 zu ersehen ist, jeder auf ein Visierelement auftreffende Lichtstrahl zur Erzeugung des Visierstrahls in zwei zueinander senkrechten Ebenen gekippt wird.

Die Kippwinkel in den beiden Ebenen sind auf die ins Endliche abbildende Optik 1 abgestimmt. Zum besseren Verständnis weist die dargestellte Visiereinrichtung lediglich vier Visierelemente 3a bis 3d auf, die kreisförmig und mit gleichem Abstand voneinander um die Optik 1 angeordnet sind. Im Scharfpunktmeßfleck, d.h. in der Schnittebene S-S erzeugen die Visierstrahlen 10, 20, 30 und 40 vier Visierpunkte S1, S2, S3 und S4, die wiederum mit gleichem Abstand auf einem Kreis angeordnet sind, der den Visierfleck kennzeichnet und in seiner Größe dem Meßfleck entspricht. Jeder der Visierpunkte ist jedoch gegenüber dem sie erzeugenden Visierelement um 90° versetzt.

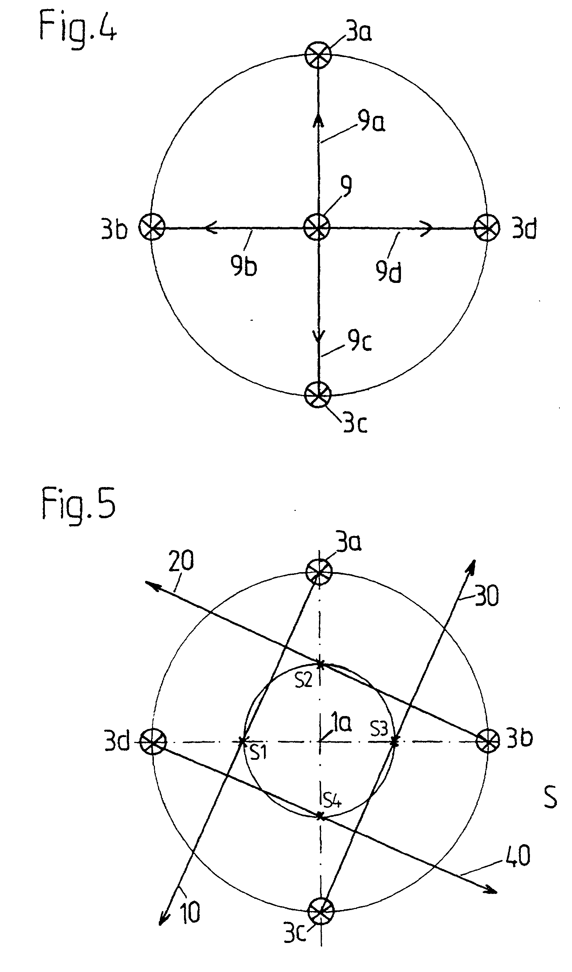

Dies wird besonders deutlich durch die Darstellung in Fig.5, die eine Ansicht in Richtung der optischen Achse 1a zeigt. Mit S wird hierbei der Scharfpunktmeßfleck bezeichnet, der durch die Visierpunkte S1, S2 und S4 gekennzeichnet wird. Der vom oberen Visierelement 3a ausgehende Strahl 10 erzeugt im Scharfpunktmeßfleck einen Punkt S1 auf der linken Seite. Der vom linken Visierelement ausgehende Visierstrahl 40 erzeugt wiederum einen Visierpunkt S4 am unteren Ende des Meßflecks S. Entsprechend wird auch der rechte und obere Visierpunkt S3, S2 durch die Visierelemente 3c und 3b erzeugt.

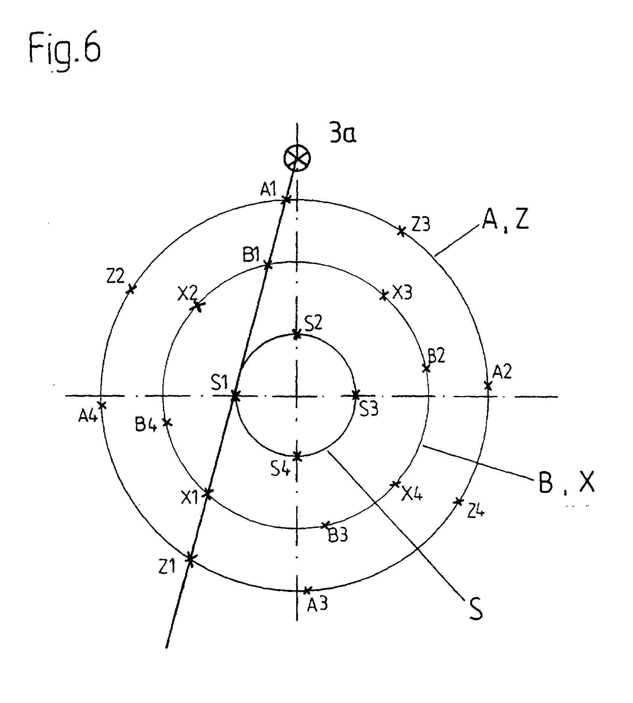

In Fig.6 sind die Visierpunkte in fünf verschiedenen Schnittebenen gemäß Fig.3 dargestellt. In jeder Schnittebene werden durch die Visierstrahlen Visierpunkte erzeugt, die den Meßfleck in dieser Ebene kennzeichnen. Die verschiedenen Schnittebenen sind derart angeordnet, daß die mittlere Schnittebene S-S den Scharfpunktmeßfleck S enthält und ferner jeweils zwei Schnittebenen vor bzw. nach dieser Ebene angeordnet sind. Die in den Ebenen vor dem Scharfpunktmeßfleck erzeugten Meßflecke haben den gleichen Durchmesser wie die in den Schnittebenen nach dem Scharfpunktmeßfleck erzeugten Meßflecke.

Betrachtet man zunächst nur den durch das Visierelement 3a erzeugten Visierstrahl 10, so schneidet dieser Strahl die verschiedenen Schnittebenen in den Punkten A1, B1, S1, X1 und Z1. In entsprechender Weise werden durch die anderen Visierstrahlen wiederum Visierpunkte in den einzelnen Schnittebenen erzeugt. Die in einer Visierebene erzeugten Visierpunkte, beispielsweise die Punkte A1, A2, A3 und A4 in der Schnittebene A-A kennzeichnen die Größe des Meßflecks, wenn sich das Objekt im gleichen Abstand von der Optik 1 befinden würde. Fig.6 läßt auch erkennen, daß sich die Größe des Meßflecks ausgehend vom Meßfleck A in der Schnittebene A-A bis zum Scharfpunktmeßfleck S verkleinert und danach wieder vergrößert. Der Abstand der Schnittebenen wurde dabei so gewählt, daß der Meßfleck A und der Meßfleck Z bzw. der Meßfleck B und der Meßfleck X jeweils die gleiche Größe haben.

Jeder einzelne Visierstrahl 10, 20, 30 und 40 ist somit in jeder Ebene vor bzw. nach dem Scharfpunktmeßfleck zur Kennzeichnung des Meßflecks verwendbar. Indem die Visierstrahlen nicht nur windschief zur optischen Achse 1a sondern auch windschief zueinander angeordnet sind, kommt es zu keinen Überschneidungen, so daß alle in einer Schnittebene erzeugten Visierpunkte den in dieser Ebene liegenden Meßfleck kennzeichnen.

Selbstverständlich können im Rahmen der Erfindung anstelle von vier auch lediglich zwei, vorzugsweise jedoch wenigstens acht Visierstrahlen verwendet werden.

Bei Verwendung von 16 Visierstrahlen wird der kreisförmige Meßfleck sehr deutlich durch die einzelnen Visierpunkte dargestellt.

Zur Erzeugung der windschiefen Strahlen sind die Visierelemente der Visiereinrichtung 3 vorteilhaft als Prismen ausgebildet. Die Ausgestaltung der einzelnen Prismen muß auf die Optik 1 abgestimmt werden. Eine andere, nicht näher dargestellte Möglichkeit, besteht beispielsweise auch darin, den Visierstrahl durch Reflektion an zwei Spiegeln in der gewünschten Art und Weise abzulenken.

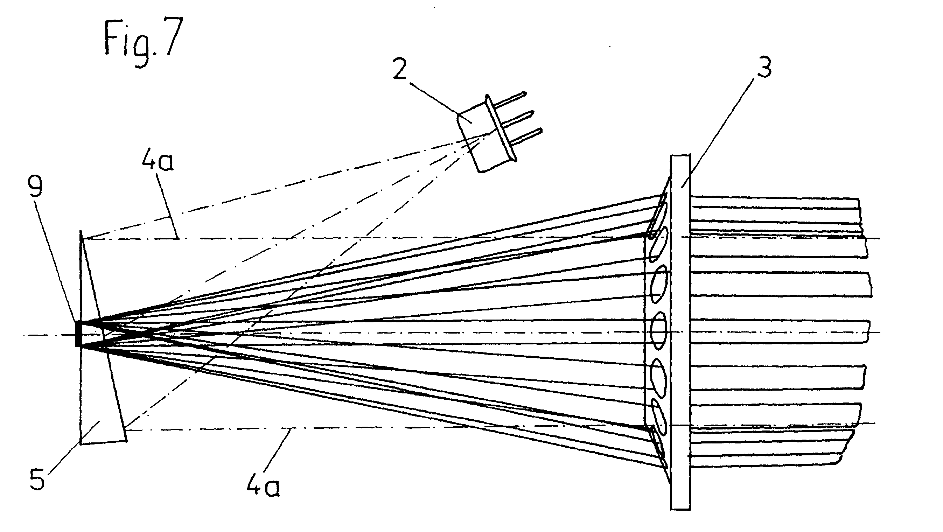

Im Ausführungsbeispiel gemäß Fig.7 ist die Visiereinrichtung 3 als Prismenring mit 16 einzelnen Prismen ausgebildet. Dieser Prismenring ist konzentrisch um die Optik 1 angeordnet. Die Visiereinrichtung 3 wirkt ferner mit der Lichtquelle 9 zusammen, deren Lichtstrahlen auf die einzelnen Visierelemente treffen. Dies kann beispielsweise dadurch realisiert werden, daß die Lichtquelle 9 eine diffraktive Optik 11 (siehe Fig.1), insbesondere ein Hologramm, bestrahlt, wobei die diffraktive Optik derart ausgebildet ist, daß eine der Anzahl der Visierelemente entsprechende Anzahl an Strahlen erzeugt wird, die auf die Visierelemente ausgerichtet sind. Es wäre jedoch auch denkbar, einen einzigen Strahl über einer rotierende Umlenkeinrichtung nacheinander auf die einzelnen Visierelemente zu richten. Selbstverständlich könnte auch jedes einzelne Visierelement mit einer zugeordneten Lichtquelle, beispielsweise einer Laserdiode, zusammenwirken.

Die in Fig.7 strichpunktiert dargestellte, vom zu untersuchenden Objekt abgestrahlte Wärmestrahlung 4a gelangt über den Umlenkspiegel 5 zum Detektor 2. Die Wärmestrahlung erzeugt im Detektor eine Spannung, die in an sich bekannter Art und Weise weiterverarbeitet wird.

Die erfindungsgemäße Vorrichtung ist besonders einfach zu handhaben, da bei jedem Abstand der Vorrichtung zum zu untersuchenden Objekt der Meßfleck eindeutig mit Hilfe der Visierpunkte sichtbar gemacht wird. Es wird somit auch die gesamte Lichtenergie der Visierstrahlen zur Darstellung des Meßflecks verwendet.

## Patentansprüche

1. , Vorrichtung zur berührunglosen Temperaturmessung eines Objekts (4) mit einer ins Endliche abbildenden Optik (1) und einem Detektor (2), wobei ein Bild des Detektors durch die Optik entlang einer optischen Achse (1a) auf einen Meßfleck am Objekt derart abgebildet wird, daß sich das Bild des Detektors ausgehend von der Optik bis zu einem Scharfpunktmeßfleck (S) verkleinert und anschließend vergrößert und ferner mit einer Visiereinrichtung (3), die mittels sichtbarer Visierstrahlen (10, 20, 30, 40) die äußere Begrenzung des Meßflecks kennzeichnet,
**dadurch gekennzeichnet, daß** jeder Visierstrahl windschief zur optischen Achse (1a) derart ausgerichtet ist, daß alle Visierstrahlen sowohl vor als auch nach dem Scharfpunktmeßfleck (S) zur Kennzeichnung der äußeren Begrenzung des Meßflecks verwendet werden.

2. Vorrichtung nach Anspruch 1, **dadurch gekennzeichnet, daß** die Visierstrahlen (10, 20, 30, 40) der Visiereinrichtung (3) zueinander windschief angeordnet sind.

3. Vorrichtung nach Anspruch 1, **dadurch gekennzeichnet, daß** die Visiereinrichtung (3) wenigstens vier, vorzugsweise wenigstens acht Visierstrahlen erzeugt.

4. Vorrichtung nach Anspruch 1, **dadurch gekennzeichnet, daß** die Vorrichtung (3) eine Lichtquelle aufweist, die mit der Visiereinrichtung (9) zusammenwirkt, wobei das Licht der Lichtquelle zur Erzeugung der Visierstrahlen verwendet wird.

5. Vorrichtung nach Anspruch 4, **dadurch gekennzeichnet, daß** die Visiereinrichtung (3) derart ausgebildet ist, daß ein auf die Visiereinrichtung treffender Lichtstrahl (9a, 9b, 9c, 9d) der Lichtquelle (9) zur Erzeugung des Visierstrahls (10, 20, 30, 40) in zwei zueinander senkrechten Ebenen gekippt wird.

6. Vorrichtung nach Anspruch 1, **dadurch gekennzeichnet, daß** die Visiereinrichtung (3) wenigstens ein Prisma zur Erzeugung des Visierstrahls aufweist.

7. Vorrichtung nach Anspruch 1, **dadurch gekennzeichnet, daß** die Visiereinrichtung (3) zur Erzeugung jedes Visierstrahls ein zugehöriges Prisma aufweist.

8. Vorrichtung nach Anspruch 4, **dadurch gekennzeichnet, daß** zwischen Lichtquelle (9) und Visiereinrichtung (3) Mittel (11) zur Erzeugung von einzelnen Lichtstrahlen entsprechend der Anzahl der Visierstrahlen vorgesehen sind.

9. Vorrichtung nach Anspruch 8, **dadurch gekennzeichnet, daß** diese Mittel durch eine diffraktive Optik (11), insbesondere ein Hologramm, gebildet werden.

10. Vorrichtung nach Anspruch 1, **dadurch gekennzeichnet, daß** die Visiereinrichtung (3) konzentrisch um die Optik (1) angeordnet ist.

## Claims

1. Device for contactless temperature measurement of an object (4) with an optical. system (1) which images into the finite and a detector (2), wherein an image of the detector is imaged by the optical system along an optical axis (1a) onto a measurement spot on the object in such a way that the image of the detector reduces from the optical system to a sharp point measurement spot (S) and then enlarges, and also with a sighting arrangement (3) which identifies the outer limit of the measurement spot by means of visible sighting rays (10, 20, 30, 40), **characterised in that** each sighting ray is aligned obliquely with respect to the optical axis (1a) in such a way that all sighting rays can be used both before and also after the sharp point measurement spot (S) to identify the outer limit of the measurement spot.

2. Device as claimed in Claim 1, **characterised in that** the sighting rays (10, 20, 30, 40) of the sighting arrangement (3) are disposed obliquely with respect to one another.

3. Device as claimed in Claim 1, **characterised in that** the sighting arrangement (3) produces four, preferably at least eight sighting rays.

4. Device as claimed in Claim 1, **characterised in that** the device (3) has a light source (9) which co-operates with the sighting arrangement, the light from the light source being used to produce the sighting rays.

5. Device as claimed in Claim 4, **characterised in that** the sighting arrangement (3) is constructed so that a light ray (9a, 9b, 9c, 9d) striking the sighting arrangement from the light source (9) for producing the sighting ray (10, 20, 30, 40) is tilted in two planes perpendicular to one another.

6. Device as claimed in Claim 1, **characterised in that** the sighting arrangement (3) has at least one prism for producing the sighting ray.

7. Device as claimed in Claim 1, **characterised in that** the sighting arrangement (3) has an assigned prism for producing each sighting ray.

8. Device as claimed in Claim 4, **characterised in that** between the light source (9) and the sighting arrangement (3) means (11) are provided for producing individual light rays according to the number of sighting rays.

9. Device as claimed in Claim 8, **characterised in that** these means are formed by a diffractive optical system (11), particularly a hologram.

10. Device as claimed in Claim 1, **characterised in that** the sighting arrangement (3) is disposed concentrically around the optical system (1).

## Revendications

1. Dispositif pour la mesure sans contact de la température d'un objet (4) avec une optique représentant dans le fini et un détecteur (2), une image du détecteur étant représentée par l'optique le long d'un axe optique (1a) sur un spot de mesure de telle sorte que l'image du détecteur en partant de l'optique jusqu'à un spot de mesure de point net (S) est diminuée et consécutivement agrandie et comportant de plus un appareil de visée (3), qui au moyen de rayons de visée visibles (10,20,30,40) repère la limite extérieure du spot de mesure,
**caractérisé en ce que** chaque rayon de visée de façon gauchie ou déversée par rapport à l'axe optique (1a) est orienté de telle sorte que tous les rayons de visée aussi bien en amont qu'en aval du spot de mesure de point net (8) sont utilisés pour le repérage de la limite extérieure du spot de mesure.

2. Dispositif selon la revendication 1, **caractérisé en ce que** les rayons de visée (10,20,30,40) de l'appareil de visée (3) sont disposés de façon gauchie ou déversée entre eux.

3. Dispositif selon la revendication 1, **caractérisé en ce que** l'appareil de visée (3) produit au moins quatre, de préférence au moins huit rayons de visée.

4. Dispositif selon la revendication 1, **caractérisé en ce que** l'appareil (3) présente une source de lumière (9) qui coopère avec l'appareil de visée , la lumière de la source de lumière étant utilisée pour la production des rayons de visée.

5. Dispositif selon la revendication 4, **caractérisé en ce que** l'appareil de visée (3) est conçu de telle sorte qu'un rayon de lumière (9a,9b,9c,9d) de la source de lumière (9) venant en incidence sur l'appareil de visée pour la production du rayon de visée (10,20,30,40) est basculé en deux plans perpendiculaires entre eux.

6. Dispositif selon la revendication 1, **caractérisé en ce que** l'appareil de visée (3) présente au moins un prisme pour la production du rayon de visée.

7. Dispositif selon la revendication 1, **caractérisé en ce que** l'appareil de visée (3) pour la production de chaque rayon de visée présente un prisme correspondant.

8. Dispositif selon la revendication 4, **caractérisé en ce qu'** entre la source de lumière (9) et l'appareil de visée (3) sont prévus des moyens (11) pour la production de rayons de lumière individuels correspondant au nombre de rayons de visée.

9. Dispositif selon la revendication 8, **caractérisé en ce que** ces moyens sont formés par une optique de diffraction (11), notamment par un hologramme.

10. Dispositif selon la revendication 1, **caractérisé en ce que** l'appareil de visée (3) est disposé de façon concentrique par rapport à l'optique (1).
